# EUROPÄISCHE PATENTSCHRIFT

(11) **EP 0 624 444 B1**
(45) Veröffentlichungstag und Bekanntmachung des Hinweises auf die Patenterteilung: **09.10.1996**
(21) Anmeldenummer: 94106836.3
(22) Anmeldetag: 02.05.1994
(51) Int. Cl.: B29B 17/00, B29C 67/24, B29B 7/74, B02C 19/06, B29K 75/00, B29K 105/04, B29K 105/26

(54) **Verfahren und Vorrichtung zum Aufbereiten von Polyurethanschaumstoff-Abfällen**
Process and device for preparing polyurethane foam scrap
Procédé et dispositif pour préparer des déchets en mousse-polyuréthane

(30) Priorität: 14.05.1993 DE 4316190
(43) Veröffentlichungstag der Anmeldung: 17.11.1994
(73) Patentinhaber: MASCHINENFABRIK HENNECKE GmbH, D-51379 Leverkusen (DE)
(72) Erfinder: Proksa, Ferdinand, Dr., D-51381 Leverkusen (DE); Sulzbach, Michael, Dipl.-Ing., D-53639 Königswinter (DE); Althausen, Ferdinand, D-53819 Neunkirchen (DE); Wirth, Jürgen, Dipl.-Ing., D-51147 Köln (DE); Raffel, Reiner, Dipl.-Ing., D-53721 Siegburg (DE)
(74) Vertreter: Drope, Rüdiger, Dr.

(56) Entgegenhaltungen:
- EP-A- 0 514 106
- WO-A-93/19848
- DE-A- 4 025 102
- DE-C- 4 030 639
- US-A- 3 726 624
- KUNSTSTOFFE, Bd.81, Nr.10, Oktober 1991, MUNCHEN DE Seiten 928 - 933 DIPL.-ING. HANS MICHAEL SULZBACH 'SCHÜTTGUT IN PUR-REAKTIONSGIESSPROZESSEN VERARBEITEN'
- DATABASE WPI Section Ch, Week 9305, Derwent Publications Ltd., London, GB; Class AGR, AN 93-040681 C05! & JP-A-04 366 119 (MITSUBISHI KASEI DOW K.K.) 18. Dezember 1992

## Beschreibung

Die Erfindung betrifft ein Verfahren und eine Vorrichtung zum Aufbereiten von Polyurethanschaumstoff-Abfällen, insbesondere Weichschaumstoff-Abfällen, zur Wiederverwertung als Zuschlagstoff bei der Polyurethanherstellung aus Polyol und Isocyanat, wobei die Abfälle zunächst grobzerkleinert werden, die erhaltenen Teilchen mit einer der Reaktionskomponenten vermischt und dieses Gemisch einer Feinzerkleinerung unterworfen wird, wie aus DE-A-2 339 752 (entsprechend GB-A-1 435 210) bekannt ist.

Gemaß DE-B-4 025 102 (entsprechend CA-A-920 209) ist es ebenfalls bekannt, Polyurethanschaumstoff-Reste auf unter 10 mm Partikelgröße zu zerkleinern und nach Vermischen mit schaumbildenden Einkomponenten-Prepolymeren wiederzuverwenden.

Polyurethanschaumstoff-Abfälle entstehen beispielsweise beim Zuschneiden von Polyurethanschaumstoffen und auch bei der Formverschäumung durch Austritt aus den Entlüftungslöchern und der Formtrennebene. Solche Abfälle sind ebenso wie Altschaumstoffteile, welche nicht mit anderen Materialien kombiniert sind, wiederaufbereitbar und lassen sich wiederverwerten. Für verschiedene Anwendungsgebiete kann eine Wiederverwertung nur dann stattfinden, wenn die Abfälle feinzerkleinert sind, d.h. Pulverform aufweisen. Die Grobzerkleinerung bereitet keine Schwierigkeiten und erfolgt beispielsweise durch Schneiden, Brechen oder Mahlen. Gemäß dem eingangs beschriebenen Stand der Technik erfolgt die Feinzerkleinerung durch Naßmahlen. Der apparative Aufwand ist dabei erheblich und das Verfahren ist mit einem hohen Energiebedarf verbunden. Es wurde auch schon Trockenmahlung für die Feinzerkleinerung angewendet, wobei der Energiebedarf mit 0,15 bis 0,2 kWh/kg Schaumstoff-Abfall etwas günstiger liegt. Wegen der erheblichen Staubbildung ist aber der apparative Aufwand ebenfalls sehr groß.

Es besteht somit die Aufgabe, eine staubarme Feinzerkleinerung bei geringerem apparativen Aufwand und geringerem Energieaufwand durchzuführen.

Diese Aufgabe wird bei einem Verfahren der eingangs genannten Art nach der Erfindung dadurch gelöst, daß eine Grobzerkleinerung bis auf eine maximale Teilchengröße von 10 mm stattfindet und daß die so erhaltenen Teilchen der Reaktionskomponente zudosiert und damit homogenisiert werden und daß dieses Gemisch zum Feinzerkleinern unter Druck durch eine Düse gepreßt wird.

Dadurch wird in der Feinzerkleinerungsstufe ein günstiger Energiebedarf erzielt und Staubbildung vermieden. Außerdem fällt das so hergestellte Pulver direkt in der Reaktionskomponente dispergiert als Füllstoff an, so daß keine zusätzliche Mischstufe mehr erforderlich ist. Es versteht sich, daß das grobzerkleinerte Gut zwischengelagert werden kann, dieses aber auch direkt der Feinzerkleinerungsstufe nach Vermischung mit der Reaktionskomponente zugeführt werden kann. Im Prinzip läßt sich das Grobgut sowohl der Polyol- als auch der Isocyanatkomponente zugeben. Man wählt aber vorzugsweise die Polyolkomponente, weil in Polyurethanschaumstoffen häufig noch freie Valenzen vorhanden sind, welche mit Isocyanat reagieren würden, wodurch es zu Verklumpungen kommen könnte.

Völlig überraschend war es, daß sich Weichschaumstoff-Flocken mit dem neuen Verfahren besonders gut feinzerkleinern lassen, weil gerade Weichschaumstoff-Abfälle wegen ihrer Elastizität die größten Anforderungen an die Zerkleinerungsverfahren stellen. Erstaunlicherweise hat sich gezeigt, daß die Teilchen beim Hindurchpressen durch die Düse zerplatzen. Die Grobteilchen sollten vorzugsweise eine maximale Größe von 10 mm besitzen, besonders bevorzugt von 2 bis 5 mm. Dabei wird vorzugsweise eine Verdüsungsgeschwindigkeit von etwa 100 bis 500 m/s eingestellt, was einem Verdüsungsdruck von etwa bis zu 2000 bar entspricht.

Es hat sich gezeigt, daß der Energiebedarf der neuartigen Zerkleinerungsstufe besonders günstig liegt. Als Homogenisiervorrichtung dient vorzugsweise ein Rührwerksbehälter, welcher gleichzeitig als Vorratsbehälter oder zur Zwischenlagerung dienen kann.

Normalerweise läßt sich die Reaktionskomponente mit der gewünschten Menge an grobzerkleinertem Abfall beladen. Es ist aber auch möglich, das Gemisch nach dem Verlassen der Feinzerkleinerungsstufe vor der Weiterverarbeitung durch weitere Zugabe von Reaktionskomponente zu verdünnen, um erforderlichenfalls die richtige Dosierung im Verhältnis zur zweiten Reaktionskomponente zu ermöglichen.

Gemäß einer besonderen Durchführungsform des neuen Verfahrens wird das Gemisch im Kreislauf geführt und mehrmals durch die Düse gepreßt.

Es hat sich gezeigt, daß bei jedem Umlauf eine weitere Zerkleinerung stattfindet.

Vorzugsweise wird der Verdüsungsdruck bei jedem Umlauf erhöht und/oder der Durchströmquerschnitt der Düse wird für jeden neuen Umlauf verkleinert.

Diese Maßnahmen bieten die Möglichkeit, auf die Feinzerkleinerungswirkung in Abhängigkeit von der Beschaffenheit des Abfallmaterials, beispielsweise seiner Elastizität und Teilchengröße, Einfluß zu nehmen.

Während eines Umlaufes wird der Verdüsungsdruck vorzugsweise konstant gehalten und damit der Feinzerkleinerungsvorgang hinsichtlich des Teilchengrößenspektrums optimiert.

Statt das Gemisch mehrmals im Kreislauf zu führen und durch die Düse zu pressen, wird es alternativ durch mehrere hintereinander angeordnete Düsen gepreßt.

Dadurch läßt sich der gleiche Effekt erzielen wie bei der mehrmaligen Kreislaufführung des Gemisches. Auch hier ist es zweckmäßig, den Durchströmquerschnitt von Düse zu Düse zu verringern. Falls die Druckverluste zu groß sein sollten, wird man zwischen den Düsen weitere Druckpumpen vorsehen und die verschiedenen Druckpumpen evtl. mit unterschiedlichen Verdüsungsdrücken betreiben.

Es hat sich als besonders vorteilhaft erwiesen, die Reaktionskomponente und grobzerkleinerten Abfall im Gewichtsverhältnis von 100 : 10 bis 100 : 100, vorzugsweise bis 100 : 20, miteinander zu vermischen.

Bei hohem Abfallanteil gibt man in vorteilhafter Weise den grobzerkleinerten Abfall in mehreren Stufen dem bereits in der Feinzerkleinerung befindlichen Abfallanteil zu.

Das geeignete Mischungsverhältnis hängt vornehmlich von der Dichte der Abfälle und deren Elastizität ab. Bei Weichschaumstoff-Abfällen wird man weniger Flüssigkeit benötigen als bei Hartschaumstoff-Abfällen.

Es versteht sich, daß die Grobzerkleinerung bereits eine möglichst kleine Teilchengröße ergeben soll. Die maximale Teilchengröße sollte 10 mm nicht überschreiten; bei Teilchengrößen um etwa 2 bis 5 mm ist die Feinzerkleinerung mit besonders gutem Erfolg durchführbar.

Gemäß einer besonders vorteilhaften Durchführungsform des neuen Verfahrens werden die durch die Grobzerkleinerung entstandenen Teilchen direkt in den Strom einer der einem Mischkopf zugeführten Reaktionskomponenten eindosiert, darin homogenisiert und der so beladene Strom verdüst, bevor er in den Mischkopf gelangt.

Diese on-line-Fahrweise hat den Vorzug, daß kein besonderer Homogenisierungsbehälter notwendig ist. Allerdings ist diese Variante nur dann geeignet, wenn das Endprodukt in einer kontinuierlich arbeitenden Anlage hergestellt wird. Für Formwerkzeuge mit eigenem Mischkopf ist diese Verfahrensweise wegen der Gefahr von Ablagerungen in den Rohrleitungen während der Pausenzeiten nicht geeignet.

Eine zur Durchführung des erfindungsgemäßen Verfahrens geeignete Vorrichtung zum Aufbereiten von Polyurethanschaumstoff-Abfällen, insbesondere Weichschaumstoff-Abfällen, zur Wiederverwertung als Zuschlagstoff bei der Polyurethanherstellung aus Polyol und Isocyanat umfaßt eine Grobzerkleinerungsvorrichtung, welcher eine Feinzerkleinerungsvorrichtung nachgeordnet ist, wobei zwischen Grobzerkleinerungsvorrichtung und Feinzerkleinerungsvorrichtung eine Homogenisiervorrichtung angeordnet ist, vor welcher bzw. in welche eine Zuleitung für eine Reaktionskomponente einmündet, wobei die Feinzerkleinerungsvorrichtung aus mindestens einer Düse besteht und dieser Düse eine Druckpumpe vorgeordnet ist.

Gegenüber der aus DE-A-23 39 752 (entsprechend GB-A 1 435 210) bekannten Naßmahlvorrichtung ist die erfindungsgemäße Vorrichtung wesentlich einfacher aufgebaut und arbeitet in der Feinzerkleinerungsstufe auch wesentlich wirtschaftlicher. Da Abfallschaumstoffe einen erhöhten Verschleiß verursachen, versieht man die Düse vorzugsweise mit einem Hartmetallbelag oder führt sie in Keramik aus.

Vorzugsweise ist der Düse eine zur Homogenisiervorrichtung führende Rücklaufleitung nachgeordnet.

Dieser Aufbau erlaubt es, das Gemisch im Kreislauf zu führen und mehrmals durch die Düse zu pressen.

Die Druckpumpe ist vorzugsweise förderdruckeinstellbar.

Damit laßt sich der Verdüsungsdruck den jeweiligen Erfordernissen anpassen. Beispielsweise wird man bei kleinerer Teilchengröße einen höheren Förderdruck anlegen.

Auch der Durchströmquerschnitt der Düse ist vorzugsweise einstellbar.

Diese Maßnahme erlaubt es ebenfalls, den Feinzerkleinerungsvorgang zu optimieren.

Vorzugsweise wird der Durchströmquerschnitt der Düse etwas größer gewählt als die Größe der hindurchzupressenden Teilchen beträgt.

Dadurch wird die Verstopfungsgefahr herabgesetzt.

Gemäß einer besonderen Ausführungsform sind mehrere Düsen hintereinander angeordnet.

Dadurch wird eine mehrmalige Kreislaufführung vermieden. Bei zu hohen Druckverlusten in den Düsen wird man zwischen den Düsen weitere Druckpumpen anordnen.

Es versteht sich, daß diese Düsen auch abnehmenden Durchströmquerschnitt aufweisen können, so daß das Gemisch durch immer engere Düsenöffnungen gepreßt wird.

Vorzugsweise ist der Düse eine Prallkammer nachgeordnet.

Dies hat den Vorteil, daß durch die Prallwirkung eine zusätzliche Zerkleinerungswirkung auftritt. Diese Wirkung wird noch dadurch verstärkt, daß man die Abströmöffnungen eingangs der Prallkammer seitlich vorsieht, so daß das rückströmende Gemisch durch den in die Prallkammer eintretenden Gemischstrahl verwirbelt wird, wobei gleichzeitig eine hervorragende Homogenisierung stattfindet.

Vorzugsweise ist der Düse ein Druckregler zugeordnet.

Dies hat den Vorteil, daß der Verdüsungsdruck konstant gehalten werden kann.

Gemaß einer besonderen Ausführungsform sind zwei Homogenisiervorrichtungen in Tandemfunktion angeordnet.

Auf diese Weise ist sichergestellt, daß immer genügend Vorrat an Gemisch für die Weiterverarbeitung vorhanden ist und daß aus einer Homogenisiervorrichtung Gemisch entnommen werden kann, während über die andere das Gemisch zum Zwecke der Feinzerkleinerung im Kreislauf geführt wird.

Eine weitere besondere Ausführungsform ist gekennzeichnet durch die unmittelbare Anordnung der Vorrichtung in einer der zu einem Mischkopf einer Schäumvorrichtung führenden Zuleitung einer der Reaktionskomponenten, wobei die Homogenisiervorrichtung aus einem Statikmischer bzw. Rührwerksmischer besteht.

Dadurch wird erreicht daß bei kontinuierlich arbeitenden Anlagen, wie sie beispielsweise für die Herstellung von Polyurethanschaumstoffbahnen auf Doppeltransportbändern oder für die Herstellung von Blockschaum Verwendung finden, der Aufbau der Homogenisiervorrichtung wesentlich vereinfacht werden kann.

Anhand der Zeichnung wird die Erfindung durch zwei Ausführungsbeispiele der rein schematisch dargestellten Vorrichtung nachstehend näher erläutert. Es zeigen:
- Fig. 1: eine erste Ausführungsform für diskontinuierliche Polyurethanherstellung,
- Fig. 2: Einspritzdüse und Prallkammer gemäß A in Fig. 1 in vergrößerter Darstellung im Schnitt,
- Fig. 3: eine Düse im Schnitt mit veränderbarem Durchströmquerschnitt und
- Fig. 4: eine zweite Ausführungsform für kontinuierliche Polyurethanherstellung.

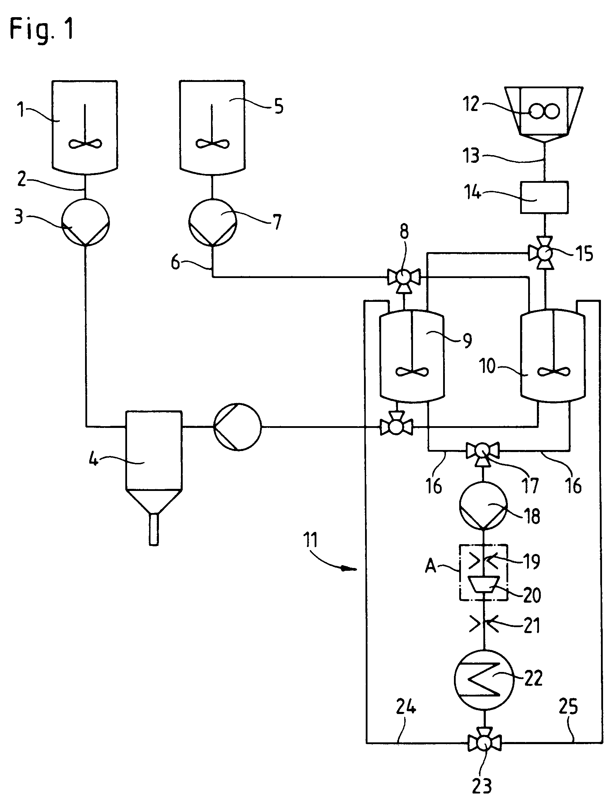

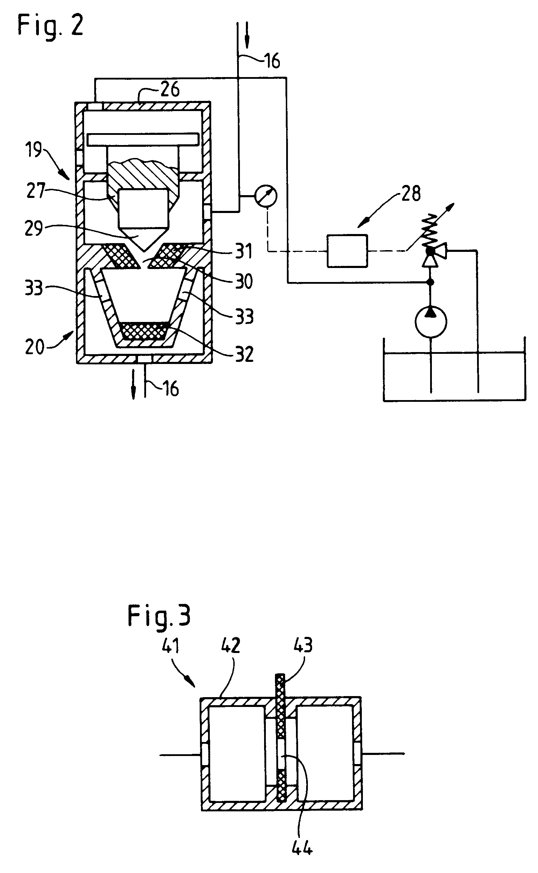

In Fig. 1, 2 führt von einem Vorratsbehälter 1 für Isocyanat eine Zuleitung 2 über eine Dosierpumpe 3 zu einem Mischkopf 4. Von einem Vorratsbehälter 5 für Polyol führt eine Zuleitung 6 über eine Dosierpumpe 7 und ein Umschaltventil 8 zu zwei in Tandemfunktion arbeitenden Homogenisiervorrichtungen 9, 10 in Form von Rührwerksbehältern. Diese sind Bestandteil einer Feinzerkleinerungsvorrichtung 11, welcher eine Grobzerkleinerungsvorrichtung 12 in Form einer Walzenmühle vorgeordnet ist. Von der Grobzerkleinerungsvorrichtung 12 führt eine Förderleitung 13 über ein Dosier- und Förderaggregat 14 und ein Umschaltventil 15 ebenfalls zu den Homogenisiervorrichtungen 9, 10. Von diesen führt eine Leitung 16 über ein Umschaltventil 17 und eine förderdruckeinstellbare Druckpumpe 18 zu einer Düse 19 mit Prallkammer 20. Dieser sind in Folge eine zweite Düse 21, ein Wärmetauscher 22 sowie ein Umschaltventil 23 nachgeordnet, von welchem Rücklaufleitungen 24, 25 zu den Homogenisiervorrichtungen 9 bzw. 10 zurückführen. Düse 19 und Prallkammer 20 sind in ein Gehäuse 26 (Fig. 2) integriert, in das die Leitung 16 seitlich einmündet. Die Düse 19 besteht aus einer hydraulisch betätigbaren Düsennadel 27 mit Druckregeleinrichtung 28. Die Spitze der Düsennadel 27 weist einen Hartmetalleinsatz 29 auf und die Düsenöffnung 30 ist in einer Keramikblende 31 angeordnet. Hinter der Düsenöffnung 30 befindet sich die Prallkammer 20, deren Boden aus einer Keramikplatte 32 besteht. Die Auslaßöffnungen 33 der Prallkammer 20 sind seitlich zur Düsenöffnung 30 hin angeordnet.

In Fig. 3 besteht die Düse 41 aus einem Gehäuse 42, in welchem ein austauschbarer Schieber 43 angeordnet ist, welcher mit einer Düsenöffnung 44 versehen ist. Dieser Schieber 43 ist gegen andere mit Düsenöffnungen 44 abweichender Größe austauschbar.

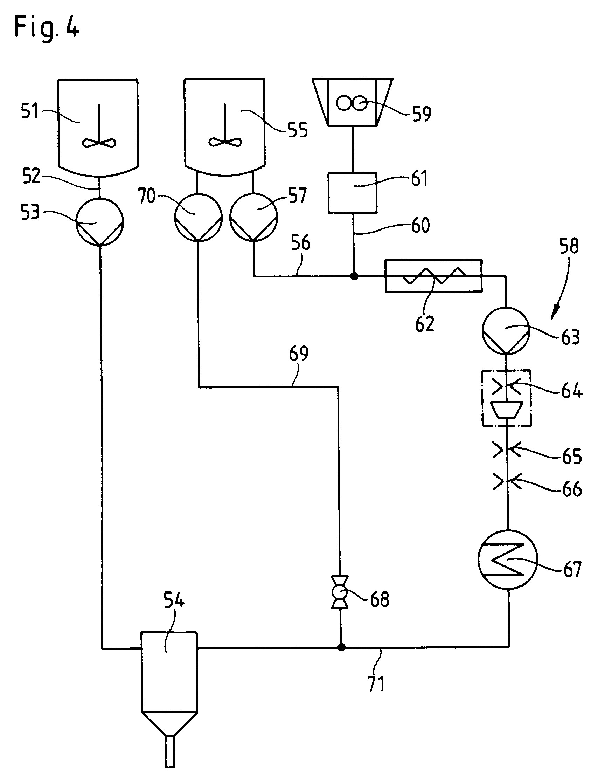

In Fig. 4 führt von einem Vorratsbehälter 51 für Isocyanat eine Zuleitung 52 über eine Dosierpumpe 53 zu einem Mischkopf 54. Von einem Vorratsbehälter 55 für Polyol führt eine Zuleitung 56 über eine Dosierpumpe 57 zu einer Feinzerkleinerungsvorrichtung 58, welcher eine Grobzerkleinerungsvorrichtung 59 in Form einer Walzenmühle vorgeordnet ist. Von dieser führt eine Förderleitung 60 über ein Dosier- und Förderaggregat 61 in die Zuleitung 56. Die Feinzerkleinerungsvorrichtung 58 besteht aus der Homogenisiervorrichtung 62 in Form eines Statik- bzw. Rührwerksmischers, welcher in der Zuleitung 56 angeordnet ist. Ihm nachgeordnet sind in Folge eine Druckpumpe 63 und drei Düsen 64, 65, 66, wobei jede folgende Düse 65, 66 einen kleineren Durchströmquerschnitt aufweist als die vorhergehende, und schließlich folgt noch ein Warmetauscher 67. In die Leitung 71 zwischen Druckpumpe 63 und Mischkopf 54 mündet über ein Zuschaltventil 68 eine separate Leitung 69, über die mittels der Dosierpumpe 70 reine Komponente zudosiert werden kann, um das Gemisch aus Reaktionskomponente und Feststoff noch verdünnen bzw. variieren zu können.

### Beispiel 1

Benutzt wird die Vorrichtung gemaß Fig. 1, wobei jedoch für diesen Versuch nur die Homogenisiervorrichtung 9 und nur die Düse 19 mit Prallkammer 20 verwendet werden. Als Druckpumpe 18 findet eine Axialkolbenpumpe mit einem Wirkungsgrad von 0,88 Anwendung. Die Grobzerkleinerungsvorrichtung 12 liefert 4 kg Weichschaumstoff-Flocken in der Teilchengröße von 3 bis 5 mm. Sie werden in der Homogenisiervorrichtung 9 mit 20 kg Polyol homogen vermischt. Anschließend werden diese 24 kg Gemisch mit einer Durchsatzmenge von 8 kg/min. bei einem Druck von 150 bar durch die Düse 19 fünfmal nacheinander hindurchgepreßt, wobei bei jedem Umlauf der Verdüsungsdruck von 150 bar konstant gehalten wird. Nach dem ersten Umlauf erhält man eine Partikelgröße von 0,5 bis 5 mm, nach dem zweiten Umlauf eine Partikelgröße von 0,3 bis 2 mm, nach dem dritten eine Partikelgröße von 0,2 bis 1 mm, nach dem vierten eine von 0,1 bis 0,5 mm und schließlich nach dem fünften Umlauf die gewünschte Partikelgröße von 0,05 bis 0,2 mm. Für diese fünf Umläufe wurden an Energie 0,133 kWh/kg Weichschaumstoff-Flocken benötigt. Arbeitet man mit einer Druckpumpe mit schlechterem Wirkungsgrad, wie beispielsweise einer Zahnradpumpe mit einem Wirkungsgrad von nur 0,5, so steigt der Energiebedarf auf 0,23 kWh/kg Weichschaumstoff-Flocken.

### Beispiel 2

Es wird in der gleichen Weise gearbeitet wie gemaß Beispiel 1, jedoch wird nach jedem Umlauf der Druck um 25 bar gesteigert. Die gewünschte Partikelgröße von 0,05 bis 0,2 mm wird schon nach vier Umläufen erreicht. Der Energiebedarf bleibt in der Größenordnung gleich. Es ergibt sich jedoch ein Zeitgewinn von 20 %.

### Beispiel 3

Es wird in der gleichen Weise gearbeitet wie gemäß Beispiel 1. Man verarbeitet jedoch Hartschaumstoff-Flocken. Die gewünschte Teilchengröße von 0,05 bis 0,2 mm laßt sich hierbei bereits nach fünf Umläufen erzielen. Der erforderliche Druck liegt jedoch in diesem Fall bei ca. 200 bar. Das heißt, der Energiebedarf beträgt 0,177 kWh/kg Hartschaumstoff-Flocken.

## Patentansprüche

1. Verfahren zum Aufbereiten von Polyurethanschaumstoff-Abfällen, insbesondere Weichschaumstoff-Abfällen, zur Wiederverwertung als Zuschlagstoff bei der Polyurethanherstellung aus Polyol und Isocyanat, wobei die Abfälle zunächst grobzerkleinert werden, die erhaltenen Teilchen mit einer der Reaktionskomponenten vermischt und dieses Gemisch einer Feinzerkleinerung unterworfen wird, dadurch gekennzeichnet, daß eine Grobzerkleinerung bis auf eine maximale Teilchengröße von 10 mm stattfindet, daß die so erhaltenen Teilchen der Reaktionskomponente zudosiert und mit dieser homogenisiert werden und daß dieses Gemisch zum Feinzerkleinern unter Druck durch eine Düse (19, 21; 41; 64, 65, 66) gepreßt wird.

2. Verfahren nach Anspruch 1, dadurch gekennzeichnet, daß die durch die Grobzerkleinerung erhaltenen Teilchen direkt in den Strom einer der einem Mischkopf (54) zugeführten Reaktionskomponenten eindosiert, darin homogenisiert und der so beladene Strom durch Düsen (64, 65, 66) gepreßt wird, bevor er in den Mischkopf (54) gelangt.

3. Vorrichtung zum Aufbereiten von Polyurethanschaumstoff-Abfällen, insbesondere Weichschaumstoff-Abfällen, zur Wiederverwertung als Zuschlagstoff bei der Polyurethanherstellung aus Polyol und Isocyanat, bestehend aus einer Grobzerkleinerungsvorrichtung (12; 59), welcher eine Feinzerkleinerungsvorrichtung (11; 58) nachgeordnet ist, wobei zwischen der Grobzerkleinerungsvorrichtung (12; 59) und der Feinzerkleinerungsvorrichtung (11; 58) eine Homogenisiervorrichtung (9, 10; 62) angeordnet ist, vor welcher bzw. in welche eine Zuleitung (6; 56) für eine Reaktionskomponente einmündet, dadurch gekennzeichnet, daß die Feinzerkleinerungsvorrichtung (11; 58) aus mindestens einer Düse (19, 21; 41; 64, 65, 66) besteht und daß dieser Düse (19, 21; 41; 64, 65, 66) eine Druckpumpe (18; 63) vorgeordnet ist.

4. Vorrichtung nach Anspruch 3, dadurch gekennzeichnet, daß der Durchströmquerschnitt der Düse (19, 21; 41; 64, 65, 66) größer gewählt wird als die Größe der hindurchzupressenden Teilchen beträgt.

5. Vorrichtung nach einem der Ansprüche 3 oder 4, dadurch gekennzeichnet, daß mehrere Düsen (19, 21; 41; 64, 65, 66) hintereinander mit abnehmendem Durchströmquerschnitt angeordnet sind.

6. Vorrichtung nach einem der Ansprüche 3 bis 5, dadurch gekennzeichnet, daß der Düse (19) eine Prallkammer (20) nachgeordnet ist.

7. Vorrichtung nach einem der Ansprüche 3 bis 6, gekennzeichnet durch ihre unmittelbare Anordnung in einer der zu einem Mischkopf (54) einer Schäumvorrichtung führenden Zuleitung (56, 71) einer der Reaktionskomponenten, wobei die Homogenisiervorrichtung (62) aus einem Statikmischer bzw. einem Rührwerksmischer besteht.

## Claims

1. Process for reprocessing polyurethane foam wastes, in particular flexible foam wastes, for recycling as an additive in the production of polyurethane from polyol and isocyanate, wherein the wastes are first comminuted coarsely, the particles obtained are mixed with one of the reaction components, and the latter mixture undergoes fine comminution, characterised in that a coarse comminution takes place down to a maximum particle size of 10 mm, that the particles thus obtained are dosed into the reaction component and are homogenised therewith, and that the latter mixture is forced under pressure through a nozzle (19, 21; 41; 64, 65, 66) for fine comminution.

2. Process according to Claim 1, characterised in that the particles obtained as a result of the coarse comminution are dosed directly into the stream of one of the reaction components supplied to a mixing head (54), and are homogenised therein, and the stream thus charged is forced through nozzles (64, 65, 66) before reaching the mixing head (54).

3. Apparatus for reprocessing polyurethane foam wastes, in particular flexible foam wastes, for recycling as an additive in the production of polyurethane from polyol and isocyanate, comprising a coarse comminution apparatus (12; 59) downstream whereof there is arranged a fine comminution apparatus (11; 58), wherein there is arranged between the coarse comminution apparatus (12; 59) and the fine comminution apparatus (11; 58) a homogenising apparatus (9, 10; 62) upstream whereof or whereinto there opens a feed line (6; 56) for a reaction component, characterised in that the fine comminution apparatus (11; 58) comprises at least one nozzle (19, 21; 41; 64, 65, 66), and a pressure pump (18; 63) is arranged upstream of the said nozzle (19, 21; 41; 64, 65, 66).

4. Apparatus according to Claim 3, characterised in that the flow area of the nozzle (19, 21; 41; 64, 65, 66) is selected so as to be larger than the particles to be forced through.

5. Apparatus according to one of Claims 3 or 4, characterised in that there is arranged one behind the other a plurality of nozzles (19, 21; 41; 64, 65, 66) having a decreasing flow area.

6. Apparatus according to one of Claims 3 to 5, characterised in that an impact chamber (20) is arranged downstream of the nozzle (19).

7. Apparatus according to one of Claims 3 to 6, characterised in that it is arranged directly in a feed line (56, 71) of one of the reaction components, which leads to a mixing head (54) of a foaming apparatus, wherein the homogenising apparatus (62) comprises a static mixer or a paddle mixer.

## Revendications

1. Procédé pour le traitement de déchets de mousses de polyuréthanne, en particulier de déchets de mousses souples, pour le recyclage en tant que produits ajoutés dans la préparation de polyuréthanne à partir de polyol et d'isocyanate, les déchets étant dans un premier temps grossièrement broyés, les particules obtenues étant mélangées avec un des constituants réactionnels et ce mélange étant soumis à un broyage fin, et caractérisé en ce qu'on réalise un broyage grossier jusqu'à une taille maximale de particules de 10 mm, en ce qu'on ajoute les particules ainsi obtenues au constituant réactionnel et on les homogénéise avec celui-ci et en ce qu'on comprime ce mélange pour un broyage fin sous pression à travers une buse (19, 21 ; 41 ; 64, 65, 66).

2. Procédé selon la revendication 1, caractérisé en ce qu'on introduit des particules obtenues par l'intermédiaire du broyage grossier directement dans le courant d'un des constituants réactionnels introduits dans une tête mélangeuse (54), on les y homogénéise et on comprime le courant ainsi chargé par l'intermédiaire de buses (64, 65, 66) avant qu'il ne parvienne dans la tête mélangeuse (54).

3. Dispositif pour le traitement de déchets de mousses de polyuréthanne, en particulier de déchets de mousses souples, pour le recyclage en tant que produits ajoutés dans la préparation de polyuréthanne à partir de polyol et d'isocyanate, constitué d'un dispositif de broyage grossier (12 ; 59), auquel on dispose en aval un dispositif de broyage fin (11 ; 58), entre le dispositif de broyage grossier (12 ; 59) et le dispositif de broyage fin (11 ; 58) étant disposé un dispositif d'homogénéisation (9, 10 ; 62), avant lequel ou dans lequel aboutit une canalisation (6 ; 56) pour un constituant réactionnel, caractérisé en ce que le dispositif de broyage fin (11 ; 58) est constitué d'au moins une buse (19, 21 ; 41 ; 64, 65, 66) et en ce qu'on dispose en amont de cette buse (19, 21 ; 41 ; 64, 65, 66) une pompe refoulante (18 ; 63).

4. Dispositif selon la revendication 3, caractérisé en ce qu'on choisit la section de passage de la buse (19, 21 ; 41 ; 64, 65, 66) supérieure à la dimension des particules à comprimer à travers celle-ci.

5. Dispositif selon l'une quelconque des revendications 3 ou 4, caractérisé en ce qu'on dispose plusieurs buses (19, 21 ; 41 ; 64, 65, 66) les unes derrière les autres avec une section de passage décroissante.

6. Dispositif selon l'une quelconque des revendications 3 à 5, caractérisé en ce qu'on dispose en aval de la buse (19) une chambre de rebondissement (20).

7. Dispositif selon l'une quelconque des revendications 3 à 6, caractérisé par sa disposition directe dans une des canalisations (56, 71) d'un des constituants réactionnels menant à une tête mélangeuse (54) d'un dispositif de moussage, le dispositif d'homogénéisation (62) étant constitué d'un mélangeur statique ou d'un mélangeur agité.
